# EUROPÄISCHE PATENTANMELDUNG

(11) **EP 2 217 042 A1**
(43) Veröffentlichungstag der Anmeldung: **11.08.2010**
(21) Anmeldenummer: 10151287.9
(22) Anmeldetag: 21.01.2010
(51) Int. Cl.: H05B 39/04

(54) **Schaltungsanordnung zum Betreiben mindestens einer Halogenlampe**

(30) Priorität: 10.02.2009 DE 102009008226
(71) Anmelder: Osram Gesellschaft mit beschränkter Haftung, 81543 München (DE)
(72) Erfinder: Häußler, Helmut, 83301 Traunreut (DE)

(57) **Zusammenfassung**

Die vorliegende Erfindung betrifft eine Schaltungsanordnung zum Betreiben mindestens einer Halogenlampe (La) mit einem Eingang mit einem ersten (E1) und einem zweiten Eingangsanschluss (E2) zum Anschließen einer Versorgungswechselspannung (U_{N}); einem Gleichrichter (D1, D2, D3, D4) mit einem Eingang, der mit dem ersten (E1) und dem zweiten Eingangsanschluss (E2) gekoppelt ist, und einem Ausgang mit einem ersten und einem zweiten Ausgangsanschluss zum Bereitstellen einer Zwischenkreisspannung (U_{Z}); einer Brückenschaltung mit zumindest einem ersten (T1) und einem zweiten elektronischen Schalter (T2) mit jeweils einer Steuerelektrode, einer Bezugselektrode und einer Arbeitselektrode, wobei der erste (T1) und der zweite elektronische Schalter (T2) unter Ausbildung eines ersten Brückenmittelpunkts (HM1) seriell zwischen den ersten und den zweiten Ausgangsanschluss des Gleichrichters (D1, D2, D3, D4) gekoppelt sind, wobei die Brückenschaltung weiterhin einen zweiten Brückenmittelpunkt (HM2) umfasst; einem ersten Transformator (TR1) mit einer Primärwicklung (W1) und einer Sekundärwicklung (W2), wobei die Primärwicklung (W1) zwischen den ersten (HM1) und den zweiten Brückenmittelpunkt (HM2) gekoppelt ist; einem Ausgang mit einem ersten (A1) und einem zweiten Ausgangsanschluss (A2) zum Bereitstellen einer Betriebsspannung (U_{A}) an die mindestens eine Halogenlampe (La), wobei der erste Ausgangsanschluss (A1) mit einem ersten Anschluss der Sekundärwicklung (W2) des ersten Transformators (TR1) und der zweite Ausgangsanschluss mit einem zweiten Anschluss der Sekundärwicklung (W2) des ersten Transformators (TR1) gekoppelt ist; einem zweiten Transformator (TR2) mit einer ersten Wicklung (S1), einer zweiten Wicklung (S2) und einer dritten Wicklung (S3), wobei die erste Wicklung (S1) des zweiten Transformators (TR2) seriell zur Primärwicklung (W1) des ersten Transformators (TR1) gekoppelt ist, wobei die zweite Wicklung (S2) mit der Steuerelektrode des ersten elektronischen Schalters und die dritte Wicklung (S3) mit der Steuerelektrode des zweiten elektronischen Schalters gekoppelt ist; einer zwischen den ersten und den zweiten Ausgangsanschluss des Gleichrichters (D1, D2, D3, D4) gekoppelten Serienschaltung mit einem ersten ohmschen Widerstand (R1) und einem ersten Kondensator (C1); und einer Zündvorrichtung (Z1), die zwischen den Verbindungspunkt des ersten ohmschen Widerstands (R1) und des ersten Kondensators (C1) einerseits und die Steuerelektrode des zweiten elektronischen Schalters andererseits gekoppelt ist; wobei die Schaltungsanordnung weiterhin umfasst: einen Mikroprozessor (10) mit mindestens einem Eingang (E3, E4) und mindestens einem Ausgang (A3, A4), wobei der mindestens eine Eingang (E3) des Mikroprozessors (10) mit mindestens einem Auskoppelpunkt zwischen dem Ausgang des Gleichrichters (D1, D2, D3, D4) und dem Ausgang (A1, A2) der Schaltungsanordnung gekoppelt ist, wobei sich der mindestens eine Auskoppelpunkt dadurch auszeichnet, dass der Betrag seines Potentials, wenn die Zwischenkreisspannung (U_{Z}) einen ersten vorgebbaren Schwellwert (U_{S}) unterschreitet, einen zweiten vorgebbaren Schwellwert unterschreitet.

## Beschreibung

### Technisches Gebiet

Die vorliegende Erfindung betrifft eine Schaltungsanordnung zum Betreiben mindestens einer Halogenlampe mit einem Eingang mit einem ersten und einem zweiten Eingangsanschluss zum Anschließen einer Versorgungswechselspannung, einem Gleichrichter mit einem Eingang, der mit dem ersten und dem zweiten Eingangsanschluss gekoppelt ist, und einem Ausgang mit einem ersten und einem zweiten Ausgangsanschluss zum Bereitstellen einer Zwischenkreisspannung, einer Brückenschaltung mit zumindest einem ersten und einem zweiten elektronischen Schalter mit jeweils einer Steuerelektrode, einer Bezugselektrode und einer Arbeitselektrode, wobei der erste und der zweite elektronische Schalter unter Ausbildung eines ersten Brückenmittelpunkts seriell zwischen den ersten und den zweiten Ausgangsanschluss des Gleichrichters gekoppelt sind, wobei die Brückenschaltung weiterhin einen zweiten Brückenmittelpunkt umfasst, einem ersten Transformator mit einer Primärwicklung und einer Sekundärwicklung, wobei die Primärwicklung zwischen den ersten und den zweiten Brückenmittelpunkt gekoppelt ist, einem Ausgang mit einem ersten und einem zweiten Ausgangsanschluss zum Bereitstellen einer Betriebsspannung an die mindestens eine Halogenlampe, wobei der erste Ausgangsanschluss mit einem ersten Anschluss der Sekundärwicklung des ersten Transformators und der zweite Ausgangsanschluss mit einem zweiten Anschluss der Sekundärwicklung des ersten Transformators gekoppelt ist, einem zweiten Transformator mit einer ersten Wicklung, einer zweiten Wicklung und einer dritten Wicklung, wobei die erste Wicklung des zweiten Transformators seriell zur Primärwicklung des ersten Transformators gekoppelt ist, wobei die zweite Wicklung mit der Steuerelektrode des ersten elektronischen Schalters und die dritte Wicklung mit der Steuerelektrode des zweiten elektronischen Schalters gekoppelt ist, einer zwischen den ersten und den zweiten Ausgangsanschluss des Gleichrichters gekoppelten Serienschaltung mit einem ersten ohmschen Widerstand und einem ersten Kondensator, und einer Zündvorrichtung, die zwischen den Verbindungspunkt des ersten ohmschen Widerstands und des ersten Kondensators einerseits und die Steuerelektrode des zweiten elektronischen Schalters andererseits gekoppelt ist.

### Stand der Technik

Die Problematik, mit der sich die vorliegende Erfindung befasst, betrifft das Dimmen von Halogenlampen. In diesem Zusammenhang wird üblicherweise das Phasenanschnitt- oder Phasenabschnittdimmen verwendet, insbesondere in Kombination mit einem Triac. Für den netzsynchronen Phasenanschnitt beziehungsweise Phasenabschnitt ist die Detektion des Nulldurchgangs der Netzspannung unumgänglich. Bekannte Realisierungen, beispielsweise der IC CA3059 der Firma ON SEMICONDUCTOR, generieren das so genannte Zero-Crossing-Signal direkt aus der Netzspannung, d.h. vor der Gleichrichtung. Nachteilig an der bekannten Lösung ist insbesondere, dass infolge von Surge-Pulsen, Netzdeformationen und andere Störungen Nulldurchgänge verursacht werden, die einen zuverlässigen Dimmbetrieb stören.

### Darstellung der Erfindung

Die Aufgabe der vorliegenden Erfindung liegt deshalb darin, die eingangs genannte Schaltungsanordnung derart weiterzubilden, dass ein störunanfälligerer Dimmbetrieb ermöglicht wird.

Diese Aufgabe wird gelöst durch eine Schaltungsanordnung mit den Merkmalen von Patentanspruch 1.

Der vorliegenden Erfindung liegt die Erkenntnis zugrunde, dass diese Aufgabe gelöst werden kann, wenn zur Detektion des Nulldurchgangs ein Auskoppelpunkt gewählt wird, der zwischen dem Ausgang des Gleichrichters und dem Ausgang der Schaltungsanordnung liegt, wobei sich der Auskoppelpunkt dadurch auszeichnen muss, dass der Betrag seines Potentials, wenn die Zwischenkreisspannung einen ersten vorgebbaren Schwellwert unterschreitet, einen zweiten vorgebbaren Schwellwert unterschreitet. Mit anderen Worten wird demnach ein Auskoppelpunkt gewählt, dessen Potential üblicherweise auf 0 V zusammenbricht, wenn die diesen Teil der Schaltungsanordnung versorgende Zwischenkreisspannung unter eine bestimmte Schwelle sinkt. Dies ist möglich, da sich der Lastkreis, an dem die Halogenlampe anzuschließen ist, bei Unterschreiten einer bestimmten Schwelle der Zwischenkreisspannung selbständig ausschaltet. Dieses Ausschalten erfolgt demnach netzsynchron und kann zur Generation des Zero-Crossing-Signals herangezogen werden.

Da sich Störungen der Netzspannung, wie beispielsweise durch Surge-Pulse oder Netzdeformationen, auf einen erfindungsgemäß gewählten Auskoppelpunkt aufgrund der üblicherweise geringen Leistungseinbrüche infolge der Trägheit der beteiligten induktiven und kapazitiven Bauelemente nicht auswirken, ermöglicht eine erfindungsgemäße Schaltungsanordnung eine einfache und robuste Detektion des Nulldurchgangs der Netzspannung. Sie benötigt wenig Bauelemente, kann einfacher als bekannte Realisierungen aufgebaut werden und erweist sich als äußerst störunanfällig.

Bei einer bevorzugten Ausführungsform ist der Mikroprozessor ausgelegt, in Abhängigkeit des Signals an seinem mindestens einen Eingang an seinem mindestens einen Ausgang ein damit zeitlich korreliertes Signal bereitzustellen, das eine Dimmung der Schaltungsanordnung ermöglicht. Dabei ist zu berücksichtigen, dass ein Mikroprozessor ohnehin üblicherweise in derartigen Schaltungsanordnungen zum Empfang des Dimmsignals, beispielsweise nach dem DALI-Standard, vorzusehen ist. Der Mikroprozessor kann nun ausgelegt werden, das Signal an seinem Eingang auf Unterschreiten einer vorgebbaren Schwelle zu überwachen, daraus den Nulldurchgang der Netzspannung abzuleiten und an seinem Ausgang ein Signal bereitzustellen, das die Dimminformation, insbesondere zur Phasenanschnitt- oder Phasenabschnittdimmung, trägt.

Bevorzugt ist zwischen den mindestens einen Auskoppelpunkt der Schaltungsanordnung und einen ersten Eingang des Mikroprozessors eine Serienschaltung, umfassend eine erste Diode und eine Glättungsvorrichtung, gekoppelt. Damit kann dem Mikroprozessor ein positives, im Wesentlichen Gleichspannungssignal, zugeführt werden, das sich durch Einbrüche auf im Wesentlichen 0 V auszeichnet, wobei die Zeitpunkte der Einbrüche den Nulldurchgang der Netzspannung anzeigen. Bei einer besonders kostengünstigen Realisierung der Glättungsvorrichtung umfasst diese einen zweiten ohmschen Widerstand und einen zweiten Kondensator.

Bei einer besonders vorteilhaften Ausführungsform umfasst der zweite Transformator zur Auskopplung eine vierte Wicklung. Wenngleich als Auskoppelpunkt auch der Halbbrückenmittelpunkt, die Signale an den elektronischen Schaltern der Brückenschaltung sowie der Mittelpunkt der Koppelkondensatoren in Betracht kommen, weist eine Auskopplung mittels einer vierten Wicklung am zweiten Transformator, der ja als Steuertransformator dient, den Vorteil auf, dass bei diesem Auskoppelpunkt das Potential während der Taktung einen konstanten Spannungspegel und während der Pausen einen Pegel von 0 V einnimmt. Dabei ist das Bezugspotential überdies frei wählbar. Weiterhin ergeben sich aufgrund des damit möglichen niedrigen Spannungsniveaus äußerst geringe Verluste, während im Stand der Technik unter hohen Verlusten die Netzspannung heruntergeteilt werden musste. Die an den Mikroprozessor zu leitende Spannung lässt sich damit auf einfache Weise durch die Anzahl der Windungen der Wicklungen des zweiten Transformators auf den Soll-Eingangsspannungsbereich des Mikroprozessors einstellen.

Damit lässt sich die Dimmung einer Halogenlampe durch einen sehr verlustarmen, einfach aufgebauten Freischwinger realisieren. Störungen der Netzspannung werden besonders zuverlässig unwirksam gemacht, da diese in dem dem Mikroprozessor zugeführten Signal quasi nicht mehr vorhanden sind.

Zur Phasenanschnittdimmung umfasst die Schaltungsanordnung weiterhin einen dritten elektronischen Schalter mit einer Steuerelektrode, einer Bezugselektrode und einer Arbeitselektrode, wobei die Steuerelektrode des dritten elektronischen Schalters mit einem ersten Ausgang des Mikroprozessors gekoppelt ist, wobei die Strecke Arbeitselektrode - Bezugselektrode des dritten elektronischen Schalters dem ersten Kondensator parallel geschaltet ist. Solange demnach der dritte elektronische Schalter leitend geschaltet ist, kann sich über dem ersten Kondensator keine Spannung aufbauen, die zur Zündung der Zündvorrichtung geeignet wäre. Dies ist erst möglich, wenn der dritte elektronische Schalter auf sperrend geschaltet wird.

Zur Realisierung einer Phasenabschnittdimmung weist die Schaltungsanordnung weiterhin einen vierten elektronischen Schalter mit einer Steuerelektrode, einer Bezugselektrode und einer Arbeitselektrode auf, wobei die Steuerelektrode des vierten elektronischen Schalters mit einem zweiten Ausgang des Mikroprozessors gekoppelt ist, wobei die Strecke Arbeitselektrode - Bezugselektrode des vierten elektronischen Schalters der vierten Wicklung parallel geschaltet ist. Wird der vierte elektronische Schalter leitend geschaltet, wird dadurch die vierte Wicklung kurzgeschlossen und über deren Kopplung mit der zweiten und dritten Wicklung auch diese. Dadurch wird die Ansteuerung des ersten und des zweiten elektronischen Schalters abgebrochen, wodurch sich ein Phasenabschnitt ergibt.

Die gleiche Wirkung ließe sich erzielen, wenn der vierte elektronische Schalter der zweiten oder dritten Wicklung des zweiten Transformators parallel geschaltet würde.

Bei einer besonders bevorzugten Ausführungsform erfolgt die Dimensionierung der Bauelemente so, dass während eines ersten Zeitraums, innerhalb dessen die Zwischenkreisspannung den ersten vorgebbaren Schwellwert überschreitet, die Hüllkurve des Potentials zwischen einem ersten und einem zweiten Auskoppelpunkt konstant und ungleich 0 V ist, und während eines zweiten Zeitraums, innerhalb dessen die Zwischenkreisspannung den ersten vorgebbaren Schwellwert unterschreitet, im Wesentlichen 0 V und insbesondere 0 V ist. Dies ermöglicht eine besonders einfache Detektion des Nulldurchgangs der Netzspannung.

Bevorzugt weist der Mikroprozessor einen zweiten Eingang auf, der zum Empfang eines Dimmsignals, insbesondere eines DALI-Signals, ausgelegt ist. Damit kann der Mikroprozessor ausgelegt werden, in Abhängigkeit der Informationen des DALI-Signals den dritten elektronischen Schalter und/oder den vierten elektronischen Schalter anzusteuern.

In diesem Zusammenhang ist der Mikroprozessor ausgelegt, das Signal an seinem ersten Eingang mit dem Signal an seinem zweiten Eingang zu verknüpfen, um an seinem ersten Ausgang ein Signal zur Bewirkung einer Phasenanschnittdimmung und/oder an seinem zweiten Ausgang ein Signal zur Bewirkung einer Phasenabschnittdimmung bereitzustellen.

Weiterhin kann vorgesehen sein, dass die Schaltungsanordnung eine Entladevorrichtung umfasst, die ausgelegt ist, den ersten Kondensator unter die Durchbruchspannung der Zündvorrichtung zu entladen, sobald die Schaltungsanordnung angeschwungen ist. Dadurch wird sichergestellt, dass die Zündvorrichtung nur zu den gewünschten Zeitpunkten zündet und einen Startimpuls an den zweiten elektronischen Schalter bereitstellt. Steuerungen durch unerwünschte Startimpulse sind damit ausgeschlossen.

Weitere vorteilhafte Ausführungsformen ergeben sich aus den Unteransprüchen.

### Kurze Beschreibung der Zeichnung(en)

Im Nachfolgenden wird nunmehr ein Ausführungsbeispiel einer erfindungsgemäßen Schaltungsanordnung unter Bezugnahme auf die beigefügten Zeichnungen näher beschrieben. Es zeigen:
- Fig. 1: in schematischer Darstellung ein Ausführungsbeispiel einer erfindungsgemäßen Schaltungsanordnung;
- Fig. 2: den zeitlichen Verlauf verschiedener Größen von FIG. 1; und
- Fig. 3: in schematischer Darstellung ein Ausführungsbeispiel einer erfindungsgemäßen Schaltungsanordnung.

### Bevorzugte Ausführung der Erfindung

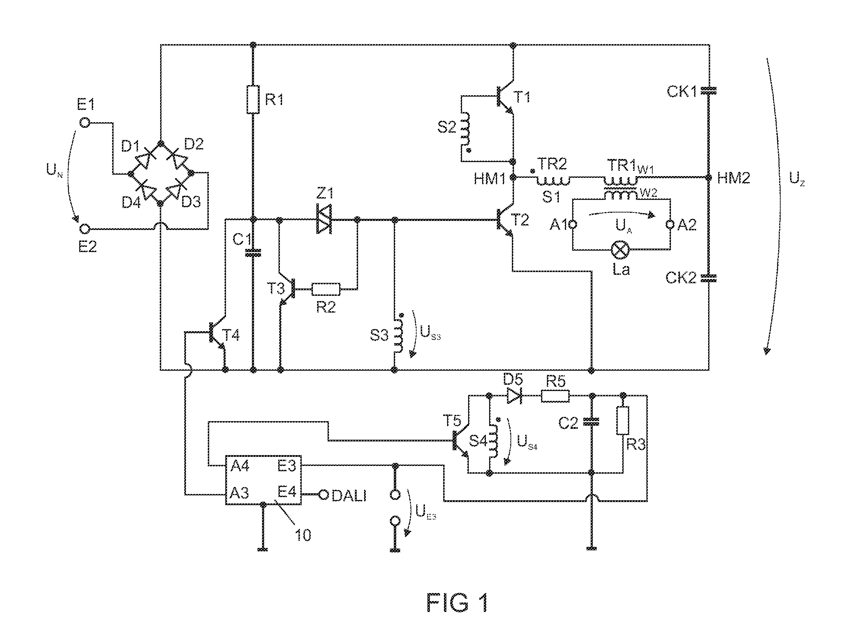

FIG. 1 zeigt in schematischer Darstellung eine Ausführungsform einer erfindungsgemäßen Schaltungsanordnung. Dabei wird die Netzspannung U_{N} zwischen einen ersten E1 und einen zweiten Eingangsanschluss E2 gekoppelt. Diese wird einem Gleichrichter zugeführt, der die Dioden D1, D2, D3 und D4 umfasst. Am Ausgang des Gleichrichters wird eine Zwischenkreisspannung U_{Z} bereitgestellt, die der gleichgerichteten Netzspannung U_{N} entspricht. Diese versorgt unter anderem eine Halbbrückenschaltung, die einen ersten Transistor T1, einen zweiten Transistor T2 sowie einen ersten Koppelkondensator C_{K1}, und einen zweiten Koppelkondensator C_{K2} umfasst. Zwischen den Transistoren T1, T2 ist ein erster Halbbrückenmittelpunkt HM1 gebildet, während zwischen den zwei Koppelkondensatoren C_{K1}, C_{K2} ein zweiter Halbbrückenmittelpunkt HM2 gebildet ist. Ein erster Transformator TR1 weist eine Primärwicklung W1 und eine damit gekoppelte Sekundärwicklung W2 auf. Die Primärwicklung W1 ist zwischen die Halbbrückenmittelpunkte HM1, HM2 gekoppelt. Die beiden Anschlüsse der Sekundärwicklung W2 bilden einen ersten A1 und einen zweiten Ausgangsanschluss A2 der Schaltungsanordnung, an die eine Halogenlampe La angeschlossen ist.

Seriell zur Primärwicklung W1 des ersten Transformators TR1 ist eine erste Wicklung S1 eines zweiten Transformators TR2 gekoppelt. Diese ist ihrerseits gekoppelt mit einer zweiten Wicklung S2, einer dritten Wicklung S3 sowie einer vierten Wicklung S4. Die zweite Wicklung S2 ist zwischen die Basis und den Emitter des Transistors T1 gekoppelt, während die dritte Wicklung S3 zwischen die Basis und den Emitter des Transistors T2 gekoppelt ist. Zwischen die Ausgänge des Gleichrichters ist weiterhin die Serienschaltung eines ohmschen Widerstands R1 sowie eines Kondensators C1 gekoppelt. Die am Kondensator C1 abfallende Spannung ist durch eine Zündvorrichtung Z1, vorliegend als Diac ausgeführt, mit der Basis des Transistors T2 gekoppelt. Sie ermöglicht dadurch ein Anschwingen der Schaltungsanordnung dann, wenn die Spannung über dem Kondensator C1 auf die Durchbruchspannung des Diacs Z1 angewachsen ist. Um nach erfolgter Zündung störende Zündimpulse zu verhindern, wird der Kondensator C1 unter Verwendung eines ohmschen Widerstands R2 und eines Transistors T3 unter die Durchbruchspannung des Diacs Z1 entladen.

Die über die vierte Wicklung ausgekoppelte Spannung wird zur Strombegrenzung an einen ohmschen Widerstand R5 gekoppelt, anschließend durch eine Diode D5 gleichgerichtet und unter Verwendung der Parallelschaltung eines Kondensators C2 und eines ohmschen Widerstands R3 geglättet. Anschließend wird sie einem ersten Eingang E3 einer Steuervorrichtung 10, insbesondere eines Mikroprozessors, zugeführt. Dem Mikroprozessor 10 wird weiterhin über einen Eingang E4 ein DALI-Signal zugeführt, das Information über einen Dimmwunsch umfasst. Der Mikroprozessor 10 weist einen ersten Ausgang A3 auf, der mit der Basis eines Transistors T4 gekoppelt ist, der dem Kondensator C1 parallel geschaltet ist. Ein zweiter Ausgang A4 des Mikroprozessors 10 ist mit der Basis eines Transistors T5 gekoppelt, der der vierten Wicklung S4 parallel geschaltet ist.

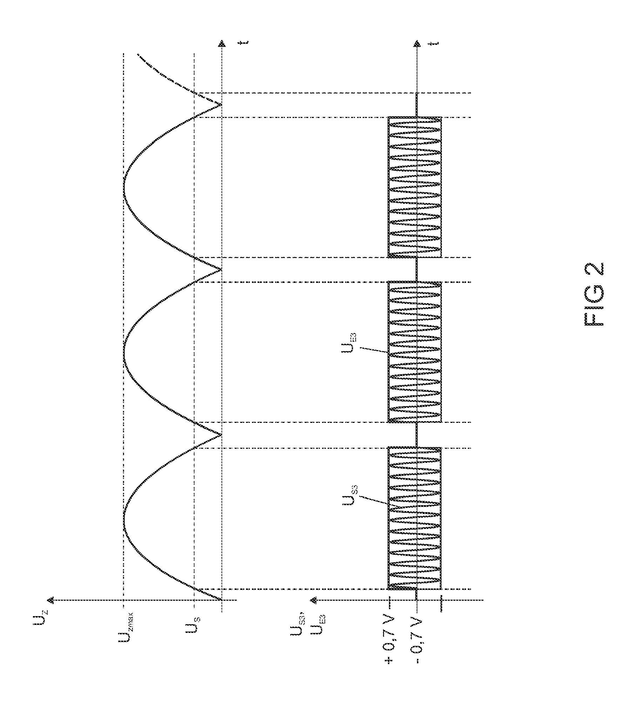

Die obere Darstellung von Fig. 2 zeigt den zeitlichen Verlauf der Zwischenkreisspannung U_{Z}. Diese verläuft halbsinusförmig zwischen 0 V und ihrem Maximalwert U_{Zmax}, der üblicherweise ca. 325 V beträgt. Unterhalb eines Schwellwerts U_{S} ist die Spannung nicht mehr ausreichend, um durch die Wicklung S3 eine Spannung von mehr als 0,7 V zu erzeugen, um den Transistor T2 leitend zu schalten. Damit geht der Transistor T2 in seinen sperrenden Zustand über, wodurch die Halbbrücke T1, T2 zum Stehen kommt. Erst wenn bei der nächsten Halbwelle der Schwellwert U_{S} wieder überschritten wird, wird ein Anlaufen der Schaltungsanordnung wieder ermöglicht. Dazu ist das Diac Z1 insbesondere so dimensioniert, dass nach seinem Durchbruch die Zwischenkreisspannung U_{Z} hoch genug ist, um dieses Anschwingen der Schaltungsanordnung zu ermöglichen.

Die untere Darstellung von FIG. 2 zeigt zunächst den zeitlichen Verlauf der Spannung U_{S3} an der dritten Wicklung S3. Wie deutlich zu erkennen, verläuft diese zunächst als hochfrequentes Wechselsignal zwischen +0,7 V und -0,7 V. Unterschreitet jedoch die Zwischenkreisspannung U_{Z} die Schwellspannung U_{S}, geht die Amplitude der Spannung U_{S3} auf 0 V zurück. Ein entsprechender Verlauf ergibt sich für die Spannung U_{S4} an der vierten Wicklung S4. Durch Gleichrichtung und Glättung der Spannung U_{S4} ergibt sich der mit fetter Linie eingezeichnete Verlauf der Spannung U_{E3} am Eingang E3 des Mikroprozessors 10. Immer, wenn die Spannung U_{E3} auf 0 V zurückgeht, wird damit ein Nulldurchgang der Netzspannung U_{N} angezeigt. Ein netzsynchrones Phasenanschnitt- beziehungsweise Phasenabschnittdimmen wird dadurch ermöglicht.

In Kenntnis des Nulldurchgangs der Netzspannung U_{N} kann damit der Mikroprozessor 10 unter Berücksichtigung des an seinem Eingang E4 zugeführten DALI-Signals an seinem Ausgang A3 ein Signal zum Phasenanschnittdimmen und an seinem Ausgang A4 ein Signal zum Phasenanschnittdimmen bereitstellen.

Mittels des am Ausgang A3 des Mikroprozessors bereitgestellten Signals kann der Transistor T4 leitend geschaltet werden. Dadurch kann ein Anwachsen der Spannung auf dem Kondensator C1 über die Durchbruchspannung des Diacs Z1 verhindert werden. Erst wenn der Transistor T4 sperrend geschaltet wird, wird die Ladung über dem Kondensator C1 über die Durchbruchspannung des Diacs Z1 anwachsen und damit einen Start der Schaltungsanordnung bewirken. Dies entspricht einem Phasenanschnittdimmen.

Zur Realisierung eines Phasenabschnittdimmens wird beispielhaft das am Ausgang A4 des Mikroprozessors bereitgestellte Signal an den Transistor T5 geführt. Solange der Transistor T5 leitend geschaltet ist, wird die vierte Wicklung S4 kurzgeschlossen und über deren Kopplung mit den Wicklungen S2 und S3 auch diese. Dadurch kann eine bereits angelaufene Schaltungsanordnung abgeschaltet werden.

Anzumerken ist, dass das Signal U_{E3} potentialfrei bereitgestellt werden kann. Dies hat den Vorteil, dass es auf jedes beliebige Potential gelegt werden kann. Besonders bevorzugt ist die Anzahl der Windungen der Wicklung S4 so gewählt, dass die Spannung U_{E3} an die benötigte Eingangsspannung des Mikroprozessors 10 angepasst ist, beispielsweise maximal 3,3 V beträgt.

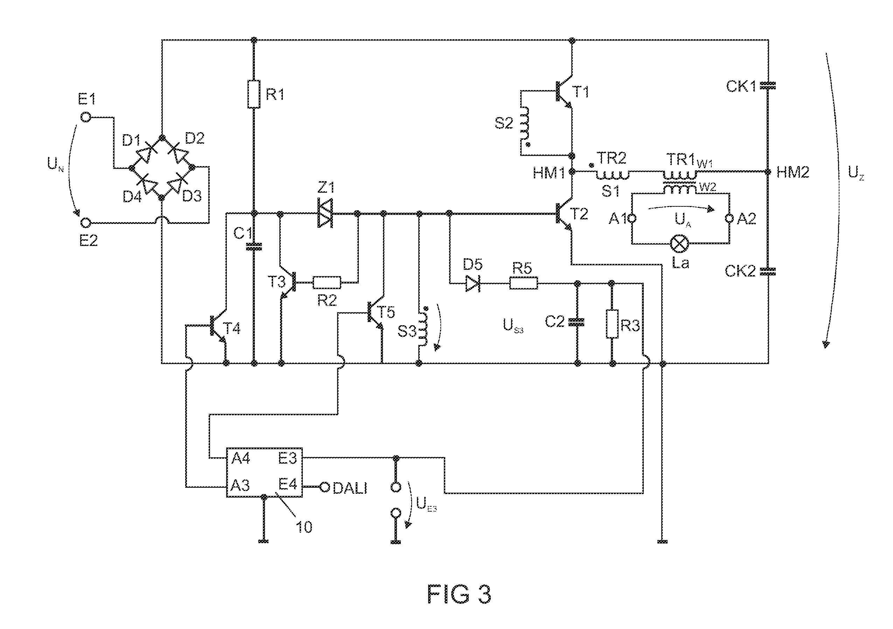

Fig. 3 zeigt eine weitere Ausführungsform einer erfindungsgemäßen Schaltungsanordnung. Soweit sie dieselben oder ähnliche Bauelemente betreffen, gelten die mit Fig. 1 eingeführten Bezugszeichen weiter. Diese Variante zeichnet sich dadurch aus, dass die Auskopplung ohne galvanische Trennung auskommt. Zur Anpassung des Pegels des ausgekoppelten Signals an den Eingangspegel des Mikroprozessors 10 kann eine Verstärkungsvorrichtung, beispielsweise ein Emitterfolger, zwischengeschaltet sein. Zur Ermöglichung eines Phasenabschnittdimmens ist hier der Transistor T5 der Wicklung S3 parallelgeschaltet, wobei, wie für den Fachmann offensichtlich, eine Parallelschaltung zur Wicklung S2 denselben Effekt hätte.

## Patentansprüche

1. Schaltungsanordnung zum Betreiben mindestens einer Halogenlampe (La) mit
- einem Eingang mit einem ersten (E1) und einem zweiten Eingangsanschluss (E2) zum Anschließen einer Versorgungswechselspannung (U_{N});
- einem Gleichrichter (D1, D2, D3, D4) mit einem Eingang, der mit dem ersten (E1) und dem zweiten Eingangsanschluss (E2) gekoppelt ist, und einem Ausgang mit einem ersten und einem zweiten Ausgangsanschluss zum Bereitstellen einer Zwischenkreisspannung (U_{Z});
- einer Brückenschaltung mit zumindest einem ersten (T1) und einem zweiten elektronischen Schalter (T2) mit jeweils einer Steuerelektrode, einer Bezugselektrode und einer Arbeitselektrode, wobei der erste (T1) und der zweite elektronische Schalter (T2) unter Ausbildung eines ersten Brückenmittelpunkts (HM1) seriell zwischen den ersten und den zweiten Ausgangsanschluss des Gleichrichters (D1, D2, D3, D4) gekoppelt sind, wobei die Brückenschaltung weiterhin einen zweiten Brückenmittelpunkt (HM2) umfasst;
- einem ersten Transformator (TR1) mit einer Primärwicklung (W1) und einer Sekundärwicklung (W2), wobei die Primärwicklung (W1) zwischen den ersten (HM1) und den zweiten Brückenmittelpunkt (HM2) gekoppelt ist;
- einem Ausgang mit einem ersten (A1) und einem zweiten Ausgangsanschluss (A2) zum Bereitstellen einer Betriebsspannung (U_{A}) an die mindestens eine Halogenlampe (La), wobei der erste Ausgangsanschluss (A1) mit einem ersten Anschluss der Sekundärwicklung (W2) des ersten Transformators (TR1) und der zweite Ausgangsanschluss mit einem zweiten Anschluss der Sekundärwicklung (W2) des ersten Transformators (TR1) gekoppelt ist;
- einem zweiten Transformator (TR2) mit einer ersten Wicklung (S1), einer zweiten Wicklung (S2) und einer dritten Wicklung (S3), wobei die erste Wicklung (S1) des zweiten Transformators (TR2) seriell zur Primärwicklung (W1) des ersten Transformators (TR1) gekoppelt ist, wobei die zweite Wicklung (S2) mit der Steuerelektrode des ersten elektronischen Schalters und die dritte Wicklung (S3) mit der Steuerelektrode des zweiten elektronischen Schalters gekoppelt ist;
- einer zwischen den ersten und den zweiten Ausgangsanschluss des Gleichrichters (D1, D2, D3, D4) gekoppelten Serienschaltung mit einem ersten ohmschen Widerstand (R1) und einem ersten Kondensator (C1); und
- einer Zündvorrichtung (Z1), die zwischen den Verbindungspunkt des ersten ohmschen Widerstands (R1) und des ersten Kondensators (C1) einerseits und die Steuerelektrode des zweiten elektronischen Schalters andererseits gekoppelt ist;
**dadurch gekennzeichnet,**
**dass** die Schaltungsanordnung weiterhin umfasst:
- einen Mikroprozessor (10) mit mindestens einem Eingang (E3, E4) und mindestens einem Ausgang (A3, A4), wobei der mindestens eine Eingang (E3) des Mikroprozessors (10) mit mindestens einem Auskoppelpunkt zwischen dem Ausgang des Gleichrichters (D1, D2, D3, D4) und dem Ausgang (A1, A2) der Schaltungsanordnung gekoppelt ist, wobei sich der mindestens eine Auskoppelpunkt **dadurch** auszeichnet, dass der Betrag seines Potentials, wenn die Zwischenkreisspannung (U_{Z}) einen ersten vorgebbaren Schwellwert (U_{S}) unterschreitet, einen zweiten vorgebbaren Schwellwert unterschreitet.

2. Schaltungsanordnung nach Anspruch 1,
**dadurch gekennzeichnet,**
**dass** der Mikroprozessor (10) ausgelegt ist, in Abhängigkeit des Signals an seinem mindestens einen Eingang (E3) an seinem mindestens einen Ausgang (A3, A4) ein damit zeitlich korreliertes Signal bereitzustellen, das eine Dimmung der Schaltungsanordnung ermöglicht.

3. Schaltungsanordnung nach Anspruch 2,
**dadurch gekennzeichnet,**
**dass** die Dimmung eine Phasenanschnitt- oder Phasenabschnittdimmung ist.

4. Schaltungsanordnung nach Anspruch 3,
**dadurch gekennzeichnet,**
**dass** zwischen den mindestens einen Auskoppelpunkt der Schaltungsanordnung und einen ersten Eingang (E3) des Mikroprozessors (10) eine Serienschaltung umfassend eine erste Diode (D5) und eine Glättungsvorrichtung (C2, R3) gekoppelt ist.

5. Schaltungsanordnung nach Anspruch 4,
**dadurch gekennzeichnet,**
**dass** die Glättungsvorrichtung einen zweiten ohmschen Widerstand (R3) und einen zweiten Kondensator (C2) umfasst.

6. Schaltungsanordnung nach einem der Ansprüche 3 bis 5,
**dadurch gekennzeichnet,**
**dass** der zweite Transformator (TR2) zur Auskopplung eine vierte Wicklung (S4) umfasst.

7. Schaltungsanordnung nach einem der Ansprüche 3 bis 5,
**dadurch gekennzeichnet,**
**dass** die Schaltungsanordnung weiterhin einen dritten elektronischen Schalter (T4) mit einer Steuerelektrode, einer Bezugselektrode und einer Arbeitselektrode umfasst, wobei die Steuerelektrode des dritten elektronischen Schalters (T4) mit einem ersten Ausgang (A3; A4) des Mikroprozessors (10) gekoppelt ist, wobei die Strecke Arbeitselektrode - Bezugselektrode des dritten elektronischen Schalters (T4) dem ersten Kondensator (C1) parallel geschaltet ist.

8. Schaltungsanordnung nach einem der Ansprüche 6 oder 7,
**dadurch gekennzeichnet,**
**dass** die Schaltungsanordnung weiterhin einen vierten elektronischen Schalter (T5) mit einer Steuerelektrode, einer Bezugselektrode und einer Arbeitselektrode umfasst, wobei die Steuerelektrode des vierten elektronischen Schalters (T5) mit einem zweiten Ausgang (A3; A4) des Mikroprozessors (10) gekoppelt ist, wobei die Strecke Arbeitselektrode - Bezugselektrode des vierten elektronischen Schalters (T5) der zweiten (S2) oder der dritten (S3) oder der vierten Wicklung (S4) parallel geschaltet ist.

9. Schaltungsanordnung nach einem der vorhergehenden Ansprüche,
**dadurch gekennzeichnet,**
**dass** während eines ersten Zeitraums, innerhalb dessen die Zwischenkreisspannung (U_{Z}) den ersten vorgebbaren Schwellwert (U_{S}) überschreitet, die Hüllkurve des Potentials zwischen einem ersten und einem zweiten Auskoppelpunkt konstant und ungleich Null Volt ist, und während eines zweiten Zeitraums, innerhalb dessen die Zwischenkreisspannung (U_{Z}) den ersten vorgebbaren Schwellwert (U_{S}) unterschreitet, im Wesentlichen Null Volt ist.

10. Schaltungsanordnung nach einem der vorhergehenden Ansprüche,
**dadurch gekennzeichnet,**
**dass** der Mikroprozessor (10) einen zweiten Eingang aufweist (E4), der zum Empfang eines Dimmsignals, insbesondere eines DALI-Signals, ausgelegt ist.

11. Schaltungsanordnung nach Anspruch 10,
**dadurch gekennzeichnet,**
**dass** der Mikroprozessor (10) ausgelegt ist, das Signal an seinem ersten Eingang (E3) mit dem Signal an seinem zweiten Eingang (E4) zu verknüpfen, um an seinem ersten Ausgang (A3) ein Signal zur Bewirkung einer Phasenanschnittdimmung und/oder an seinem zweiten Ausgang (A4) ein Signal zur Bewirkung einer Phasenabschnittdimmung bereitzustellen.

12. Schaltungsanordnung nach einem der vorhergehenden Ansprüche,
**dadurch gekennzeichnet,**
**dass** die Schaltungsanordnung weiterhin eine Entladevorrichtung (R2, T3) umfasst, die ausgelegt ist, den ersten Kondensator (C1) unter die Durchbruchspannung der Zündvorrichtung (Z1) zu entladen, sobald die Schaltungsanordnung angeschwungen ist.
